Europäisches Patentamt

European Patent Office

Office européen des brevets

(19)

(11) Publication number: **0 238 679**
**B1**

(12) **EUROPEAN PATENT SPECIFICATION**

(45) Date of publication of the patent specification:
**03.10.90**

(21) Application number: **86103965.9**

(22) Date of filing: **22.03.86**

(51) Int. Cl.⁵: **B60C 15/06**

(54) **Radial tire for passenger car.**

(43) Date of publication of application:
**30.09.87 Bulletin 87/40**

(45) Publication of the grant of the patent:
**03.10.90 Bulletin 90/40**

(84) Designated Contracting States:
**DE FR GB IT**

(56) References cited:
**FR-A- 1 255 078**
**FR-A- 2 013 540**
**FR-A- 2 130 097**
**GB-A- 963 893**
**GB-A- 975 262**
**JP-A-60 047 706**

(73) Proprietor: **THE YOKOHAMA RUBBER CO., LTD., 36-11,
Shinbashi 5-chome Minato-ku, Tokyo, 105(JP)**

(72) Inventor: **Morikawa, Tuneo, 2211, Minamigoaka
Hadano-shi, Kanagawa-ken(JP)**
Inventor: **Kuze, Tetsuya, 28-1,
Minamihara 1 Hiratsuka-shi, Kanagawa-ken(JP)**

(74) Representative: **Weber, Dieter, Dr. et al, Dr. Dieter Weber
und Dipl.-Phys. Klaus Seiffert Patentanwälte
Gustav-Freytag-Strasse 25 Postfach 6145,
D-6200 Wiesbaden 1(DE)**

ACTORUM AG

## Description

This invention relates generally to a radial tire for passenger car, and more particularly to a radial tire for a passenger car having an improved structure for the portion of the tire ranging from bead portions to its side wall portions in order to improve driving stability and durability without reducing driving comfortableness.

A radial tire to which the present invention relates, is defined by the features of the preamble of claim 1. Such tire is known from FR-A-2,130,097.

Generally, radial tires consist of a pair of right and left bead portions, a pair of right and left side wall portions continuing the bead portions, respectively, and a tread portion interposed between the side wall portions. Furthermore, a carcass layer having a cord angle in the range of 70° to 90° in a tire circumferential direction is fitted between the bead portions, and a plurality of belt layers which have cord angles of 10° to 35° in the tire circumferential direction and in which the cords of one of the belt layers cross those of the other belt layers is disposed on the carcass layer at the tread portion.

In the radial tire of the type described above, since the reinforcing cords of the carcass layer are arranged substantially at right angles to the tire circumferential direction deformation of the side wall portions is easy to develop during driving. Therefore, although good driving comfortableness can be obtained in a vertical direction, the delay of maneuvering response and unstability are likely to occur in a longitudinal direction as well as in a transverse direction due to excessive deformation.

Means for improving the problem resulting from the excessive deformation described above while maintaining good driving comfortableness is disclosed, for example, in Japanese Patent Application Kokai Publication No. 57-18503 and Japanese Patent Publication No. 56-47004.

In Japanese Patent Application Kokai Publication No. 57-18503, a reinforcing layer is disposed in close contact with the outer or inner side of a bead filler in such a manner as to extend in the range of 50 to 75% of the sectional height of the tire.

If the reinforcing layer is disposed outside the bead filler, it undergoes compressive deformation in the proximity of a rim flange, while it undergoes compressive deformation at the side wall portions when it is disposed inside the bead filler. Therefore, durability of the tire, particularly its high speed durability and load durability, cannot be improved. Moreover, since the upper half of the reinforcing layer passes through a neutral axis, rigidity cannot be increased and driving stability cannot be improved.

Therefore, this prior art reference attempts to obtain the reinforcing effect by disposing the reinforcing layer in such a manner as to extend beyond 50% of the tire sectional height. As a result, a flex zone (bending zone) becomes extremely narrow and driving comfortableness drops.

On the other hand, Japanese Patent Publication No. 56-47004 disposes the reinforcing layer along the neutral axis.

Therefore, the reinforcing layer receives neither compressive stress nor tensile stress so that the rigidity improving effect by the disposition of the reinforcing layer is small and driving stability cannot be improved.

As described above, the conventional means are not entirely satisfactory in obtaining the intended effects.

From the above-mentioned FR-A-2, 130, 097 a radial tire is known having a reinforcing structural member, which is arranged between a filler and a carcass. The reinforcing structural member comprises two nylon cord strips having a metal cord strip interposed between them.

Additionally a radially outermost portion of the reinforcing structural member is sandwiched between a hard rubber profile and the filler. However, there is no teaching in FR-A-2,130,197 regarding the thickness of the upper filler and the bead filler in order to provide a particular path of the metal reinforcing layer in the cross-section of said tire to be running substantially along a tensile stress zone only.

Therefore, for such tire the driving stability and the durability cannot be improved without impairing the ride or driving comfort.

The present invention therefore contemplates to provide an excellent radial tire for a passenger car which improves driving stability and durability (particularly high speed durability and load durability) without reducing driving comfort by improving a reinforcing structure of the tire from its bead portions to its side wall portions.

This object is achieved by a radial tire according to the preamble of claim 1 which is characterized in that said belt layers have a cord angle in the range of 10° to 35° to the tire circumfenterial direction wherein the cords of one of said belt layers cross those of the other belt layer, that the metal reinforcing layer is a steel reinforcing layer, the vertical distance of the steel reinforcing layer interposed between the upper filler and the bead filler being set in the range of from 20 % to 40 % of the height of the steel reinforcing layer, and the height of the halving point of the vertical distance of the steel reinforcing layer being set in the range of from 150% to 250% of the height of the rim flange, such that upon applying a load on the tire during driving, said steel reinforcing layer is kept under tensile stress whereas the upper filler and the bead filler are substantially kept under compressive stress.

The above and other objects and novel features of the present invention will become more apparent from the following description to be taken in conjunction with the accompanying drawings.

EP 0 238 679 B1

Fig. 1 is a partial cut-away schematic sectional view of a radial tire for a passenger car in accordance with the present invention;

Fig. 2 is a partial cut-away schematic sectional view of the tire showing the state in which a load acts upon the tire during driving;

Fig. 3 is a schematic view showing the principal portions of the radial tire for a passenger car in accordance with the present invention;

Figs. 4 and 5 are schematic sectional views showing the principal portions of the radial tire for a passenger car in accordance with other embodiments of the present invention; and

Figs. 6(A) through 6(D) are schematic sectional views showing the principal portions of a tire as a comparative example and those of the tire of the present invention.

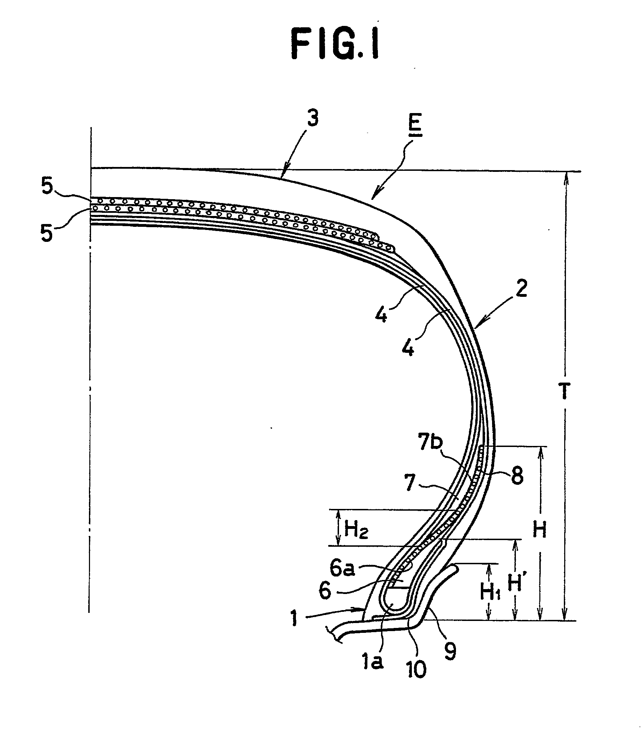

In Fig. 1, symbol E represents a radial tire for a passenger car in accordance with a first embodiment of the present invention. The radial tire E consists of a pair of right and left bead portions 1, 1, a pair of right and left side wall portions 2, 2 continuing the bead portions 1, 1, respectively, and a tread portion 3 interposed between the side wall portions 2, 2. A carcass layer having a cord angle in the range of 70° to 90° in a tire circumferential direction is fitted between the bead portions 1, 1, and a plurality of belt layers 5 which have a cord angle in the range of 10° to 35° in the tire circumferential direction and in which the cords of one of the belt layers cross those of the other belt layers are disposed on the carcass layer 4 at the tread portion 3.

In accordance with the present invention, an upper filler 7 is disposed on a bead filler 6 positioned on a bead wire 1a buried in each of the bead portions 1, 1 (that is, on the side of the tread portion 3), and a single layer of a steel reinforcing layer 8 is disposed between the upper filler 7 and the bead filler 6 from the outside 7b of the upper filler 7 along the inside 6a of the bead filler 6 in such a manner that its height H from a bead heel does not exceed 50% of a tire sectional height T.

This structure will be explained in further detail. As shown in Fig. 1, the steel reinforcing layer 8 is disposed in such a manner that is extends from the outside 7b of the upper filler 7 along the inside 6a of the bead filler 6 and is interposed between the upper filler 7 and the bead filler 6.

Here, the steel reinforcing layer 8 is preferably disposed in such a manner as to satisfy each of the following relations:

$$1.0 \times H_1 \leqq H' \leqq 3.0 \times H_1,$$
$$0.15 \times H \leqq H_2 \leqq 0.5 \times H,$$
$$H \leqq 0.5 \times T$$

where:

T: sectional height of tire,
H: height of steel reinforcing layer 8 from bead heel 10,
$H_1$: height of rim flange 9 from bead heel 10,
$H_2$: vertical distance of steel reinforcing layer 8 interposed between upper filler 7 and bead filler 6,
H': height from bead heel 10 to a halving point of vertical distance $H_2$ of steel reinforcing layer.

If the height H' of the halving point of the vertical distance $H_2$ of the steel reinforcing layer 8 is less than 100% of the height $H_1$ of the rim flange 9, the steel reinforcing layer 8 will undergo compressive stress in the proximity of the rim flange, and if the former exceeds 300% of the latter, the steel reinforcing layer 8 will undergo compressive stress in the proximity of the upper filler 7, on the contrary.

It is further preferred that the height H' of the halving point of the vertical distance $H_2$ of the steel reinforcing layer 8 be set in the range of 150% to 250% of the height $H_1$ of the rim flange 9.

If the vertical distance $H_2$ of the steel reinforcing layer 8 interposed between the upper filler 7 and the bead filler 6 is less than 15% of the height H of the steel reinforcing layer 8, durability will drop at the intermediate point of the vertical distance $H_2$ of the steel reinforcing layer 8, and if the former exceeds 50% of the latter, the reinforcing effect by the steel reinforcing layer 8 will drop undesirably.

It is further important that the vertical distance $H_2$ of the steel reinforcing layer 8 interposed between the upper filler 7 and the bead filler 6 be set in the range of 20% to 40% of the height H of the steel reinforcing layer 8.

If the height H of the steel reinforcing layer 8 exceeds 50% of the sectional height t of the tire, the flex zone (blending zone) will become narrow and driving comfortableness will drop undesirably.

If the steel reinforcing layer 8 is disposed in such a manner as to satisfy each of the relations described above, it becomes possible to always keep the steel reinforcing layer 8 under the tensile stress state and the upper filler 7 and the bead filler 7 substantially under the compressive stress state when a load is applied to the tire during driving. Therefore, necessary rigidity can be secured most efficiently at the portions ranging from the bead portions, 1, 1 to the lower portions of the side walls 2, 2, and moreover, compressive rigidity that exerts adverse influences upon driving comfortableness does not drastically increase due to the addition of the steel reinforcing layer 8.

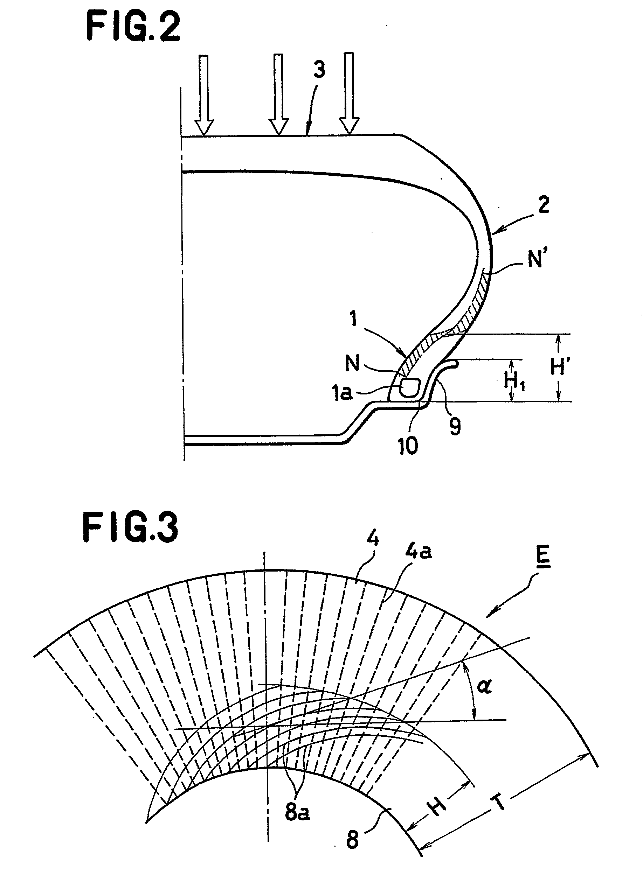

Fig. 2 shows the state under which a load acts upon the tire during driving.

In Fig. 2, portions with oblique lines are under the tensile stress condition, and N - N' is a neutral line

3

between a tensile stress zone and a compressive tensile zone determined by an FEM calculation method (finite element method).

The steel reinforcing layer 8 of this tire is always positioned at the portions with the oblique lines in the tensile stress zone. Driving stability of the tire can be drastically improved by the steel reinforcing layer 8 that is under the tensile stress condition, but no substantial influences are exerted upon the increase of compressive rigidity that affects adversely driving comfortableness. The rubber layers of the upper filler 7 and bead filler 6 becomes a factor that determines the compressive rigidity. In other words, each side wall portion of the tire consists of the steel reinforcing layer 8 on which the tensile stress acts, and the upper filler 7 and bead filler 6 on which compressive stress acts, and the rigidity from the bead portion to the lower part of the side wall portion can be ideally improved without deteriorating driving comfortableness.

Fig. 3 shows the angle α of the reinforcing cords 8a constituting the steel reinforcing layer 8 with respect to the tire circumferential direction. In order to improve the reinforcing effect, this angle α is preferably set in the range of 15° to 45°.

If the angle α is less than 15°, the bending rigidity of the steel reinforcing layer 8 will drop and if the angle α exceeds 45°, the bending rigidity becomes so high that rigidity balance will collapse undesirably.

More preferably, the angle α is within the range of 15° to 30°.

In the present invention, there is no need substantially to take the compressive rigidity of the steel reinforcing layer 8 into consideration, and the angle α of the reinforcing cords of the steel reinforcing layer 8 in the tire circumferential direction can be changeable in accordance with the intended performance of the tire.

Since the bead filler 6 and the upper filler 7 receive the compressive stress as described already, their hardness is preferably set within the range of JIS hardness 60° to 95°.

If the hardness of the bead filler 6 and upper filler 7 is less than JIS hardness 60°, the difference of their rigidity with the rigidity of the steel reinforcing layer becomes so great that durability will drop. If their hardness exceeds 95°, on the other hand, the hardness of the bead filler is so high that driving comfortableness will drop undesirably.

If the hardness of the bead filler 6 and upper filler 7 is set within the range of JIS hardness 80 to 90°, the difference of rigidity with the reinforcing cords 8a of the steel reinforcing layer 8 can be reduced and driving comfortableness can be improved advantageously.

The hardness of the bead filler 6 and that of the upper filler 7 may be different within the range of JIS hardness described above, and preferably the JIS hardness of the bead filler is equal to, or higher than, the JIS hardness of the upper filler.

If the relation of JIS hardness between the bead filler and the upper filler is opposite to the relation described above, the improving effect of the bead portions as a whole for driving comfortableness and driving stability will drop.

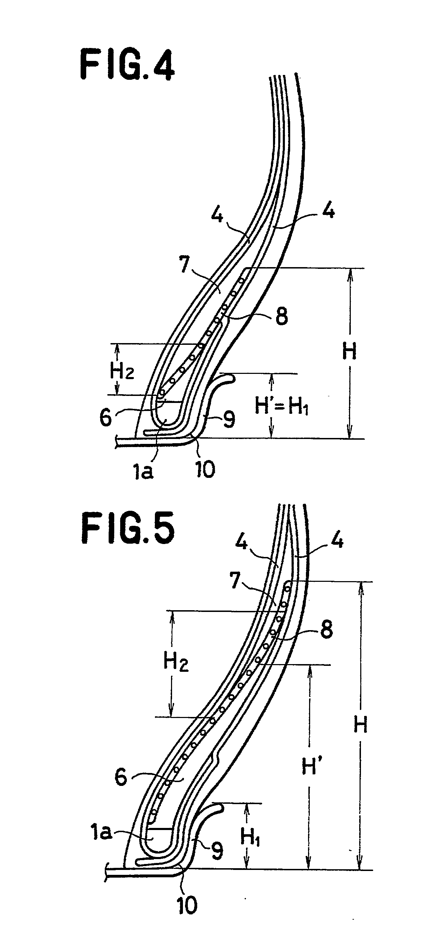

Figs. 4 and 5 shows the principal portions of the radial tires in accordance with other embodiments of the present invention. Fig. 4 is a schematic sectional view showing the principal portions of the present tire when H' = 1.0 x $H_1$, $H_2$ = 0.3 x H and H - 0.30 x T. Fig. 5 is a schematic sectional view showing the principal portions of the present tire when H' - 3.0 x $H_1$, $H_2$ = 0.35 x H and H = 0.45 x T.

Next, Experimental Examples will be illustrated in order to confirm the effect of the present invention.

Experimental Example 1:

Each of the sample tires having the following specification was produced and mounted to a test car, and maneuverability, stability and driving comfortableness were evaluated by five panelers.
(Tire specification)

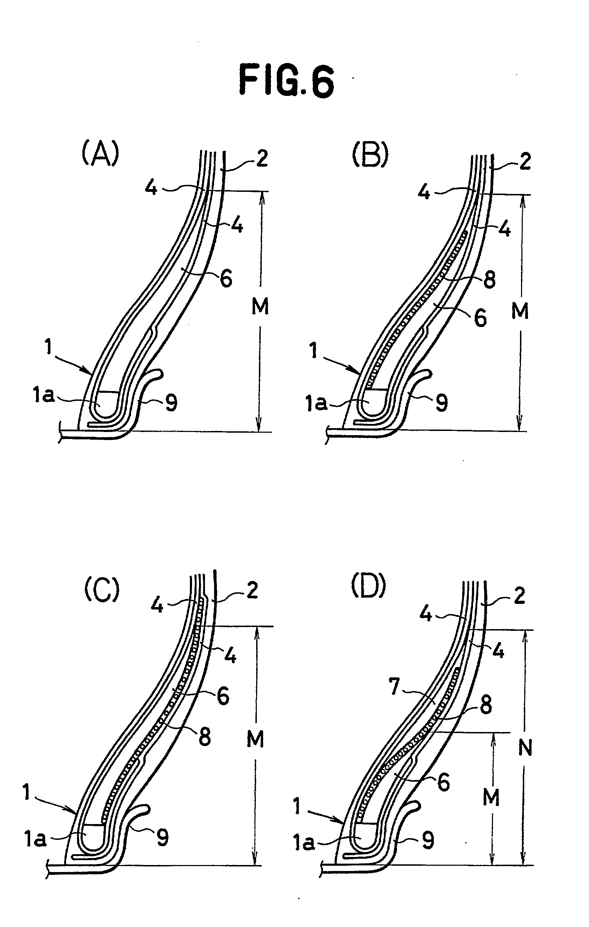

tire size ............. 195/70 R 14
air pressure .......... 2.0 kg/cm²
weight of test car .... 1,100 kg
tire structure ......... structures shown in Figs. 6(A) - 6(D). In the drawing, symbol M represents a bead filler height from bead heel and N does an upper filler height from bead heel.
definite structures .... as tabulated in Table 1 below.

## Table 1

| | (A) Tire of Comparative Example | (B) Tire of Comparative Example | (C) Tire of Comparative Example | (D) Tire of this Invention |
|---|---|---|---|---|
| H | | 60 | 80 | 60 |
| H' | | | | 35 |
| $H_2$ | | | | 15 |
| H/T | | 40% | 55% | 40% |
| angle of steel reinforcing layer | | 25° | 25° | 25° |
| bead filler hardness | 90° | 90° | 90° | 90° |
| upper filler hardness | | | | 90° |
| height of bead filler or upper filler | 70 | 70 | 70 | 70 |

(Test condition and Evaluation method)

Each of the sample tires was fitted to the test car. After the five panelers got on the test car, the car was driven at speeds of 30 to 100 km/hr on a JARI overall test road in order to evaluate maneuverability, stability and driving comfortableness.

Evaluation was made by the five panelers and their mean value was expressed by a ten-point method. Hence, the higher the point, the higher the performance.

The results of experiments are tabulated in Table 2.

## Table 2

| | (A) Tire of Comparative Example | (B) Tire of Comparative Example | (C) Tire of Comparative Example | (D) Tire of this Invention |
|---|---|---|---|---|
| maneuverability | 7.0 | 7.0 | 7.2 | 8.0 |
| stability | 7.0 | 6.5 | 6.0 | 8.0 |
| driving comfortableness | 8.0 | 7.5 | 6.0 | 8.0 |

5

The following points (1) through (3) can be understood from Table 2:

(1) The tire (B) of Comparative Example did not exhibit any improvement in maneuverability over the tire (A) of the Comparative Example, but exhibited the drop in stability and driving comfortableness.

(2) The tire (C) of Comparative Example exhibited some improvements in maneuverability over the tire (A) of Comparative Example, but stability as well as driving confortableness dropped drastically.

(3) The tire (D) of the present invention could drastically improve maneuverability and stability over the tires (A), (B) and (C) of Comparative Examples, but driving comfortableness comparable to that of the tire (A) of Comparative Example could be secured.

Experimental Example 2:

Indoor high speed durability test and indoor load durability test were carried out using the same tires as those used in Experimental Example 1.
(Tire specification)

The same as those used in Experimental Example 1.
(Test condition)

As tabulated in Table 3.

## Table 3

| indoor high speed durability test | internal pressure: | 3.0 kg/cm$^2$, drum diameter 1707 mm |
| | load: | 520 kg constant |
| | speed: | raised from 170 km/hr every 10 minutes at a rate of 10 km/hr till tire was broken. |
| indoor load durability test | internal pressure: | 2.4 kg/cm$^2$, drum diameter 1707 mm |
| | speed: | 81 km/hr constant |
| | load: | raised from 511 kg every 4 hours at a rate of 75 kg till tire was broken. |

The results of the tests are tabulated in Table 4.
Incidentally, evaluation was made in terms of index using the value of the tire (A) as 100.

6

## Table 4

| | (A) Tire of Comparative Example | (B) Tire of Comparative Example | (C) Tire of Comparative Example | (D) Tire of this Invention |
|---|---|---|---|---|
| indoor high speed durability test | 100 | 103 | 120 | 146 |
| indoor load durability test | 100 | 105 | 68 | 138 |

As can be seen clearly from Table 4, the tire (D) of the present invention could drastically improve high speed durability as well as load durability in comparison not only with the tire (A) of Comparative Example but also with the tires (B) and (C) of Comparative Examples.

As described above, in accordance with the present invention, the upper filler is disposed on the tread portion side of the bead filler positioned on the bead wire buried in each bead portion, and a single steel reinforcing layer is disposed between the upper filler and the bead filler in such a manner that it extends from the outside of the upper filler to the inside of the bead filler and its height H from the bead heel does not exceed 50% of the sectional height T of the tire. Therefore, the steel reinforcing layer can be kept always under the tensile stress condition.

Therefore, maneuvering stability and durability (particularly high speed durability and load durability) can be drastically improved without reducing driving comfort.

## Claims

1. A radial tire for a passenger car of the type which consists of a pair of right and left bead portions (1, 1), a pair of right and left side wall portions (2, 2) continuing said bead portions (1, 1), respectively, and a tread portion (3) interposed between said side wall portions (2, 2) and in which a carcass layer (4) having a cord angle in the range of 70° to 90° to a tire circumferential direction is fitted between said bead portions (1, 1), and a plurality of belt layers (5) are disposed on said carcass layer (4) at said tread portion (3), an upper filler (7) being disposed on a tread portion side of a bead filler (6) positioned on a bead wire (1a) embedded in each of said bead portions (1, 1) and a single metal reinforcing layer (8) being interposed between said upper filler (7) and said bead filler (6) in such a fashion that said metal reinforcing layer (8) extends from the outside of said upper filler (7) to the inside of said bead filler (6), said metal reinforcing layer (8) having a height (H) from a bead heel (10) which does not exceed 50 % of a sectional height (T) of said tire, characterized in that said belt layers (5) have a cord angle in the range of 10° to 35° to the tire circumferential direction wherein the cords of one of said belt layers (5) cross those of the other belt layer (5), that the metal reinforcing layer is a steel reinforcing layer (8), the vertical distance (H₂) of the steel reinforcing layer (8) interposed between the upper filler (7) and the bead filler (6) being set in the range of from 20% to 40% of the height (H) of the steel reinforcing layer (8), and the height (H') of the halving point of the vertical distance (H₂) of the steel reinforcing layer (8) being set in the range of from 150% to 250% of the height (H₁) of the rim flange (9), such that upon applying a load on the tire during driving, said steel reinforcing layer (8) is kept under tensile stress whereas the upper filler (7) and the bead filler (6) are substantially kept under compressive stress.

2. A radial tire for a passenger car according to claim 1, characterized in that reinforcing cords constituting said steel reinforcing layer (8) have an angle α which is in the range of 15° to 45° to the tire circumferential direction.

3. A radial tire for a passenger car according to claim 1, characterized in that the hardness of said bead filler (6) and that of said upper filler (7) are set in the range of JIS hardness of 60° to 95°, respectively.

4. A radial tire for a passenger car according to claim 1, characterized in that the JIS hardness of said filler (6) is equal to, or higher than, the JIS hardness of said upper filler (7).

## Patentansprüche

1. Radialreifen für einen Personenwagen, wobei der Reifen von der Art ist, welche ein Paar von rechten und linken Wulstabschnitten (1, 1), ein Paar von rechten und linken Seitenwandabschnitten (2, 2), die die jeweiligen Wulstabschnitte (1, 1) fortsetzen, und einen Laufflächenabschnitt (3) aufweist, welcher zwischen den Seitenwandabschnitten (2, 2) angeordnet ist, und in welchem eine Karkassenschicht (4), die einen Cordwinkel im Bereich von 70 bis 90° zur Umfangsrichtung des Reifens hat, zwischen den Wulstabschnitten (1, 1) befestigt ist, und wobei eine Mehrzahl von Gürtelschichten (5) auf der Karkassenschicht (4) an dem Laufflächenabschnitt (3) angeordnet sind, ein oberes Füllmaterial (7) auf der Seite eines Wulstfüllmaterials (6) zur Lauffläche hin angeordnet ist, wobei das Wulstfüllmaterial auf einem in jedem der Wulstabschnitte (1, 1) eingebetteten Wulstdraht (1a) angeordnet ist, und wobei eine einzelne Metallverstärkungsschicht (8) zwischen dem oberen Füllmaterial (7) und dem Wulstfüllmaterial (6) in der Weise angeordnet ist, daß sich die Metallverstärkungsschicht (8) von der Außenseite des oberen Füllmaterials (7) zur Innenseite des Wulstfüllmaterials (6) erstreckt, und die Metallverstärkungsschicht (8) eine Höhe (H) von einer Wulstferse (10) aus hat, welche 50% der Querschnitthöhe (T) des Reifens nicht übersteigt, dadurch gekennzeichnet, daß die Gürtelschichten (5) einen Cordwinkel im Bereich von 10° bis 35° zur Reifenumfangsrichtung haben, wobei die Corde einer der Gürtelschichten (5) die der anderen Gürtelschicht (5) kreuzen, daß die Metallverstärkungsschicht eine Stahlverstärkungsschicht (8) ist, daß der vertikale Abschnitt ($H_2$) der Stahlverstärkungsschicht (8), welcher zwischen dem oberen Füllmaterial (7) und dem Wulstfüllmaterial (6) liegt, auf den Bereich von 20% bis 40% der Höhe (H) der Stahlverstärkungsschicht (8) festgelegt wird, und daß die Höhe (H') des Mittelpunktes des vertikalen Abschnittes ($H_2$) der Stahlverstärkungsschicht (8) auf den Bereich von 150% bis 250% der Höhe ($H_1$) des Felgenflansches (9) festgelegt wird, derart, daß beim Aufbringen einer Belastung auf den Reifen während des Fahrens die Stahlverstärkungsschicht (8) unter Zugbelastung gehalten wird, während das obere Füllmaterial (7) und das Wulstfüllmaterial (6) im wesentlichen unter Druckbelastung gehalten werden.

2. Radialreifen für einen Personenwagen nach Anspruch 1, dadurch gekennzeichnet, daß die Verstärkungscorde, welche die Stahlverstärkungsschicht (8) bilden, einen Winkel $\alpha$ aufweisen, der im Bereich von 15° bis 45° zur Umfangsrichtung des Reifens liegt.

3. Radialreifen für einen Personenwagen nach Anspruch 1, dadurch gekennzeichnet, daß die Härte des Wulstfüllmaterial (6) und die des oberen Füllmaterial (7) in dem Bereich einer JIS-Härte von 60° bzw. 95° festgelegt werden.

4. Radialreifen für einen Personenwagen nach Anspruch 1, dadurch gekennzeichnet, daß die JIS-Härte des Füllmaterials (6) größer oder gleich der JIS-Härte des oberen Füllmaterials (7) ist.

## Revendications

1. Pneumatique radial pour voiture de tourisme du type qui comprend un bourrelet droit et un bourrelet gauche (1, 1), une région de paroi latérale droite et une région de paroi latérale gauche (2, 2) continuant lesdits bourrelets (1, 1) respectivement, et une région de roulement (3) interposée entre lesdites régions de parois latérales (2, 2) et dans lequel une couche de carcasse (4) dont les cordes sont inclinées d'un angle compris entre 70° et 90° par rapport à une direction circonférentielle du pneumatique est disposée entre lesdits bourrelets (1, 1), et une pluralité de couches de ceinture (5) sont disposées sur la dite couche de carcasse (4) dans ladite région de roulement (3), un remplissage supérieur (7) étant disposé du côté de la région de roulement par rapport à un remplissage de bourrelet (6) placé sur un câble de bourrelet (la) noyé dans chacun desdits bourrelets (1, 1), et une seule couche de renforcement en métal (8) étant interposée entre ledit remplissage supérieur (7) et ledit remplissage de bourrelet (6) d'une manière telle que ladite couche de renforcement en métal (8) s'étend de la face extérieure dudit remplissage supérieur (7) à la face intérieure dudit remplissage de bourrelet (6), la dite couche de renforcement en métal (8) ayant une hauteur (H) à partir d'un talon de bourrelet (10) qui ne dépasse pas 50% d'une hauteur (T) de la section dudit pneumatique, caractérisé en ce que lesdites couches de ceinture (5) ont un angle d'inclinaison des cordes compris entre 10° et 35° par rapport à la direction circonférentielle du pneumatique et les cordes d'une des dites couches de ceinture (5) croisent celles de l'autre couche de ceinture (5), en ce que la couche de renforcement en métal est une couche de renforcement en acier (8), la distance verticale ($H_2$) de la couche de renforcement en acier (8) interposée entre le remplissage supérieur (7) et le remplissage de bourrelet (6) étant choisie dans la plage de 20% à 40% de la hauteur (H) de la couche de renforcement en acier (8) et la hauteur (H') du point milieu de la distance verticale ($H_2$) de la couche de renforcement en acier (8) étant choisie dans la plage de 150% à 250% de la hauteur ($H_1$) du rebord de jante (9) de sorte que, lorsqu'une charge s'exerce sur le pneumatique pendant l'utilisation, ladite couche de renforcement en acier (8) est maintenue sous un effort de traction tandis que le remplissage supérieur (7) et le remplissage de bourrelet (6) sont sensiblement maintenus sous un effort de compression.

2. Pneumatique radial pour voiture de tourisme suivant la revendication 1, caractérisé en ce que les cordes de renforcement constituant ladite couche de renforcement en acier (8) ont un angle $\alpha$ qui est compris entre 15° et 45° par rapport à la direction circonférentielle du pneumatique.

**EP 0 238 679 B1**

3. Pneumatique radial pour voiture de tourisme suivant la revendication 1, caractérisé en ce que la dureté du dit remplissage de bourrelet (6) et celle dudit remplissage supérieur (7) sont choisies dans la plage de dureté JIS de 60° à 95°, respectivement.

4. Pneumatique radial pour voiture de tourisme suivant la revendication 1, caractérisé en ce que la dureté JIS dudit remplissage (6) est égale ou supérieure à la dureté JIS dudit remplissage supérieur (7).

EP 0 238 679 B1

# FIG.1

# FIG.2

# FIG.3

**FIG.4**

**FIG.5**

# FIG.6

(A)

(B)

(C)

(D)